Europäisches Patentamt

European Patent Office

Office européen des brevets

(11) Publication number: **0 456 488 A1**

# EUROPEAN PATENT APPLICATION

(21) Application number: **91304169.5**

(22) Date of filing: **09.05.91**

(51) Int. Cl.$^5$: **C03C 17/36, G02B 5/08, G02B 1/10**

(30) Priority: **10.05.90 US 521829**

(43) Date of publication of application:
**13.11.91 Bulletin 91/46**

(84) Designated Contracting States:
**AT BE CH DE DK ES FR GB IT LI LU NL SE**

(71) Applicant: **THE BOC GROUP, INC.**
**575 Mountain Avenue**
**Murray Hill New Jersey 07974 (US)**

(72) Inventor: **Grubb, Albany D.**
**640 Castle Rock Road**
**Walnut Creek, California 94598 (US)**
Inventor: **Overacker, Walter G.**
**7035 Hemlock Street**
**Oakland, California 94611 (US)**
Inventor: **Vossen, John L., Jr.**
**1012 Sunset Ridge**
**Bridgewater, New Jersey 08807 (US)**
Inventor: **Wolfe, Jesse D.**
**3003 Pine Valley Road**
**San Ramon, California 94583 (US)**

(74) Representative: **Bousfield, Roger James et al**
**The BOC Group plc Chertsey Road**
**Windlesham Surrey GU20 6HJ (GB)**

(54) **Front surface mirrors.**

(57) A monolithic front surface mirror comprising a substrate (12), a metal layer (18), a first dielectric layer (20) and a second dielectric layer (22). In one preferred embodiment, a metal film is deposited onto a substrate and thereafter a low refractive index dielectric layer is deposited onto the metal layer followed by a high refractive index dielectric layer. A final protective dielectric layer may be deposited to increase overall durability. The metal, dielectric and protective layers of the front surface mirror are preferably deposited by a sputtering process using a rotating cylindrical magnetron.

FIG. 2

The present invention relates generally to mirrors, and more particularly, to front surface mirrors that are resistant to mechanical and chemical attack.

Most commercial mirrors are second surface mirrors comprising silvered glass composite structures wherein a thin layer of silver is deposited on the back or second surface of a glass substrate to reflect light. Silvered glass mirrors are generally desired because of their high visible reflectance and lack of colour. Because silver does not adhere well directly to glass, a relatively thin metal precoat is applied to the glass surface prior to the application of the silver. In order to protect the silver layer from damage and degradation, a protective coating is applied to its exposed surface. A common protective coating is a copper layer deposited over the silver followed by a thick paint spread over the copper layer. The copper layer interposed between the silver and paint layers enhances adhesion of the paint to the silver.

Second surface silvered glass mirrors are susceptible to a phenomenon called "black edge". This degradative process occurs when silver on the cut edge of the mirror is exposed to moisture. This leads to chemical corrosion, which forms a "black edge" on the mirror that moves progressively inward. This degradative process is even more prevalent and pronounced when silver mirrors are used in high humidity environments.

The above-described method of manufacturing second surface silver mirrors is also causing environmental concerns. Of primary concern is the lead and chemicals which are found in the waste products produced in the manufacturing process. For example, the Environmental Protection Agency (EPA) has been paying particular attention to the rinse water left over from the silvering process. The rinse water, which contains chemicals, silver, copper and tin, is designated by the EPA as hazardous waste and the EPA imposed disposal limits upon it. To complicate matters, the limits differ from state to state, and even between federal, state and city levels. For instance, it is not uncommon for city regulations to be more stringent than state or federal regulations.

The paint used to back mirrors has to comply with certain industry requirements, but this also creates environmental problems. For example, as mentioned previously, a substratum coating of copper is first applied to the silver, making it necessary for the backing paint to possess adhesion and performance qualities in combination with the copper. Additional requirements demanded by mirror manufacturers involve the fabrication of the paint itself and its ability to prevent deterioration of the silver. Increasingly, many manufacturers are also requiring the paint to be durable and to adhere well to the copper and silver underneath it. Thus far, the paints that meet all these requirements contain lead. Attempts have been made to develop a non-leaded paint to replace what is currently being used. However, no non-leaded paint substitute equivalent to the leaded products has been developed.

Much of the hazardous waste lead is derived from the later stages of the manufacturing process when the edges of a fabricated mirror are ground. In effect, part of the mirror backing is ground as well. As a result, trace amounts of lead are found in the grinding water. Another problem associated with the use of lead paint is that there is no effective recycling of scrap mirrors due primarily to the existence of the lead. Waste water treatment and other means of cleaning the lead, silver and other hazardous materials from the effluents of mirror manufacturing facilities offer only a short-term solution to the environment problem.

The present invention is concerned with the provision of mirrors that are generally resistant to mechanical and chemical attack and ones which can be manufactured without producing hazardous wastes.

In accordance with the invention, there is provided a front surface mirror which comprises a substrate onto which is deposited a metal layer, followed by one or more series of low and high refractive index dielectric layers that may be covered by a final protective layer. The reflectance of the metal is enhanced by the high-low refractive index dielectric layers. The protective layer can be formed from various materials, including silicon dioxide and silicon nitride. In addition, the dielectric layers can be modified to produce mirrors that exhibit different hues.

With rotating cylindrical magnetrons, the films deposited are of uniform thickness and are durable. In the sputtering process, the substrate is not heated. Moreover, large-scale operations and high deposition rates are possible. Furthermore, the environmental problems associated with the manufacture and disposal of conventional second surface silver mirrors are non-existent since hazardous materials are not used and the sputtering does not involve chemical processes that discharge effluents that contain toxic waste, or the use of protective paint.

For a better understanding of the invention, reference is now made, by way of exemplification only, to the accompanying drawings in which:

Figure 1 is a cross-sectional view of a conventional second surface silver mirror.

Figure 2 is a cross-sectional view of a front surface mirror produced in accordance with this invention.

Figure 3 is a cross-sectional view of a front surface mirror produced in accordance with this invention.

Figure 4 is a cross-sectional view of a front surface mirror produced in accordance with this invention.

Figure 5 is a cross-sectional view of a front surface mirror produced in accordance with this invention.

Figure 6 are graphs of the percent inflectances of (1) an inventive chromium front surface mirror; (2) unenhanced chromium; and (3) a conventional second surface silver mirror measured against the wavelength of radiation over the visible spectrum.

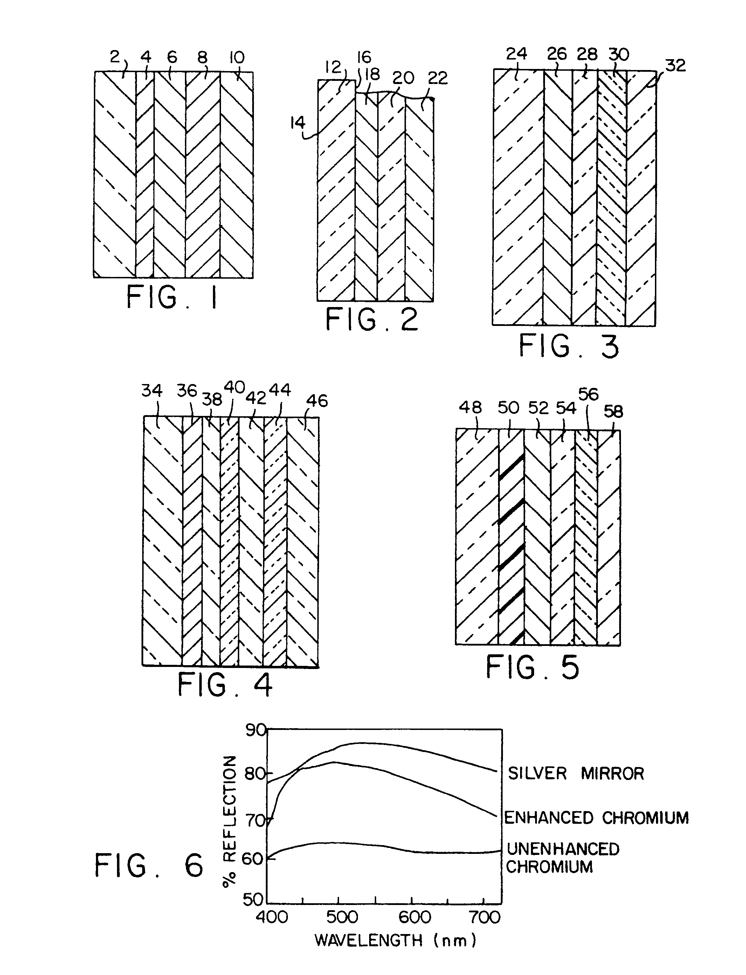

A typical second surface silver mirror structure is illustrated in Figure 1. It is a composite structure comprised of a glass substrate 2 with a layer of silver 6 coated on the glass substrate surface. A precoat 4, usually consisting of tin, is deposited on the surface of the glass substrate prior to the silver to enhance adhesion of the silver layer to the glass substrate. A paint layer 10 is coated over the mirror to provide it with some protection from the environment. Because paint does not adhere very well to the silver, a thin copper layer 8 is first deposited on the silver layer, and thereafter paint is coated over the copper layer.

A novel monolithic front surface mirror incorporating the present invention is shown in figure 2. As shown therein, the mirror consists of a substrate 12 having a surface 14 which is the backside exposed to air and a surface 16 which is coated. The substrate can be formed of any suitable materials that offer rigid support such as glass, plastic, metal or wood.

In this embodiment, the coating is formed of three layers. First, a reflective metal layer 18 is deposited onto surface 16. This metal layer can be formed from a number of metals, but chromium or a chromium alloy is preferred. It has been found that chromium is particularly satisfactory because it produces a hard, corrosion-resistant mirror having a high visible reflectance with minimal colour. Nickel-chromium alloys and iron-nickel-chromium alloys, such as stainless steel, produce mirrors having similar high durability but slightly lower reflectance. Aluminium and rhodium produce mirrors having even higher reflectance, but aluminium layers are softer and less corrosion-resistant than chromium and rhodium is prohibitively expensive for most commercial applications. The thickness of the metal coating ranges from 400 to 650 angstroms, and preferably from 400 to 600 Å. The next two layers in the coating consist first of a low refractive index dielectric layer 20 followed by a high refractive index dielectric layer 22. In this invention, a "low" refractive index is in the range 1.65 or less, and a "high" refractive index is in the range 2.0 or greater. The refractive index for various materials at a wavelength of 550 nm is given below in parenthesis. In this preferred embodiment, silicon dioxide (1.46) has been found to be particularly satisfactory as the low refractive index dielectric materials and titanium dioxide (2.25 to 2.6) has been found to be particularly satisfactory as the high index dielectric material. Other dielectric materials which also can be utilised include aluminium oxide (1.65), tantalum oxide (2.1 to 2.2), tin oxide (2.0), and zinc oxide (2.0). The thickness of the low refractive index dielectric layer ranges from 600 to 1200 Å, and more preferably from 615 to 920 Å. The thickness of the high refractive index dielectric layer ranges from 400 to 650 Å, and more preferably from 415 to 625 Å.

The use of the low and high refractive index dielectric layers increases the reflectance of the metal layer. For instance, chromium which reflects approximately 65 percent of visible light can be enhanced by the embodiment as shown in Figure 2 to reflect approximately 84 percent of visible light. The extent of the enhancement depends upon the ratio r of the high to the low refractive index. A ratio r of 1.35 or greater is preferred because the embodiment of Figure 2 will enhance the reflectance of a chromium layer to be 75% or greater from 450 to 590 nm, and provide an integrated visible reflectance of 77% or greater. A ratio r of 1.5 or greater is more preferred because the embodiment of Figure 2 will enhance the reflectance of a chromium layer to be 76% or greater from 430 to 700 nm, and provide an integrated visible reflectance of 80% or greater. Reflectance can be further enhanced by additional low and high refractive index layers; however, the breadth of the enhanced region decreases.

In a conventional second surface silver mirror, light is transmitted through the thick glass, reflected from the silver layer, and thereafter transmitted back through the thick glass. This creates double images that are readily apparent when objects are placed next to the glass of the mirror. Front surface mirrors (alternatively called first surface mirrors) of the present invention eliminate the double image problem as the light is not transmitted through the substrate and the dielectric layers through which light is transmitted are extremely thin in comparison to the glass found in conventional mirrors.

In conventional mirrors, the glass serves to protect the soft silver layer from the environment. With front surface mirrors of this invention, the thin dielectric layers that enhance reflectivity also serve as a protective coating.

To increase durability, an additional dielectric layer can be deposited. As shown in Figure 3, this preferred embodiment consists of substrate 24 that is coated with metal layer 26, a low refractive index dielectric layer 28, a high refractive index dielectric layer 30, and a final protective coating 32. The protective coating can be formed from a number of materials, including silicon dioxide or silicon nitride. Other materials which also can be utilised include the low refractive index dielectric materials referenced above. The thickness of the final protective layer ranges from 300 to 1400 Å.

In the above-described embodiments, excluding the protective layer, each embodiment consists of only one series of alternating high and low refractive index dielectric layers, eg. titanium dioxide followed by silicon dioxide. However, one or more additional series of high and low refractive index layers can be utilised. For instance, Figure 4 illustrates an embodiment of the invention comprising two series of high and low refractive index layers. Specifically, a metal layer 36 is coated onto substrate 34. Onto the metal layer is deposited a low refractive index dielectric layer 38, followed by a high refractive index dielectric layer 40, followed by a second low refractive index dielectric layer 42, and finally, by a second high refractive index dielectric layer 44. A protective coating 46 provides additional resistance to mechanical and chemical attack. The thickness of the first high and low refractive index dielectric layers and of the protective coating is comparable to those specified previously; however, the thickness of the second low refractive index layer is preferably between 745 and 1110 Å and the thickness of the second high refractive index layer is preferably between 425 and 640 Å.

As stated previously, increasing the number of layers of alternating high and low refractive index dielectric materials has the effect of increasing the reflectance of the mirror. For instance, chromium reflects approximately 65 percent of visible radiation. The invention as illustrated in Figures 2 or 3, which employs a single series of high-low refractive index layers, can effectively enhance the reflectance of chromium to approximately 84 percent. Furthermore, the invention as illustrated in Figure 4, which employs two series of alternating high and low refractive index layers, increases the reflectance of chromium to approximately 93 percent.

Finally, Figure 5 illustrates another embodiment of the invention. In this embodiment, a layer of dielectric material is situated between the substrate and metal layer. Specifically, onto substrate 48 is first deposited a dielectric material 50 such as silicon dioxide; thereafter, a metal layer 52 is deposited thereto. A low refractive index dielectric layer 54 covers the metal layer 52, followed by a high refractive index dielectric layer 56. Finally, a protective layer 58 may be deposited. The thickness of the dielectric layer between the substrate and metal ranges from approximately 300 to 1000 Å. In this embodiment, the dielectric layer between the substrate and metal layers improves the hardness of the film.

By varying the thicknesses of the dielectric layers and/or the selection of the dielectric material, it is possible to produce tinted front surface mirrors.

The coatings described above are prepared by DC reactive sputtering with a rotating cylindrical magnetron. The magnetron reactive sputtering technique is particularly useful for depositing dielectric films. While there are other techniques for depositing the metal dielectric layers such as thermal oxidation and LPCVD (low pressure chemical vapour deposition), these methods suffer from, among other things, slow deposition rates. Moreover, RF planar magnetron sputtering is unpredictable for large-scale industrial applications because of the enormous power requirements. Finally, conventional "wet, dip and dry" methods for large-scale operations are inadequate for applications requiring high purity and precise, uniform film thicknesses. A description of the method for coating substrates with dielectric materials such as silicon dioxide and silicon nitride is found in our co-pending application No. PCT US90/06459 and is incorporated herein by reference.

Metal layers are readily deposited with the rotating cylindrical magnetron although they can be deposited by conventional planar magnetrons also.

The materials used in the manufacture of the inventive front surface mirrors are not toxic. In particular, the dielectric materials are inert and do not pose a health risk. Metallic silver and leaded paint used in conventional second surface mirrors are not used at all. Furthermore, the manufacturing process employing the rotating cylindrical magnetron does not produce toxic by-products that manufacturers of conventional mirrors must contend with.

Mirrors in accordance to the invention were manufactured and tested for their mechanical and optical properties.

The films were originally deposited in a research size in-line cylindrical magnetron manufactured by Airco Coating Technology, a division of Assignee. The same results were later duplicated in a larger cylindrical magnetron, the C-MAG™ model 3000 cathode, also manufactured by Airco under substantially the same process conditions. In addition, more sophisticated applications of the inventive method are possible with the model 3000. The research coater is capable of substrate sizes up to 16 inches wide, whereas the larger coater was capable of substrate sizes up to 1 metre wide. Research coaters normally operate at approximately 3 kW power whereas the model 3000 normally operates between 30 to 40 kW. Tests indicate that the research and model 3000 produce film of the same quality. Both systems use untrapped diffusion pumps that achieved a base pressure in the $10^{-6}$ Torr range before operation. Argon was used as an inert gas and oxygen was used as the reactant gas. The partial pressure of the gas was determined by the transition from the oxide mode to the metallic mode. Experiments were run as close to that transition as practicable. The pressure and flow rate of the sputtering gases were controlled by conventional devices.

The power applied varied for the different target materials but for the most part it was comparable to the maximum obtainable with similar size planar magnetrons. Each sputtering source was connected to an appropriate direct current power source having provision for automatically maintaining the voltage, current or power, as desired.

Because the electrical conductivity of pure silicon is so low that it is unsuitable for sputtering with direct current, the silicon target was impregnated or doped with a small amount of aluminium in the range of from 2-4%. The target was prepared by plasma spray.

The film deposited according to the invention contains reaction products of aluminium and silicon with the reactive gas. When the reactive gas was oxygen, the deposition coating contained a mixture of aluminium and silicon oxides. All of these components are relatively hard and form an amorphous film that acts as a strong barrier. However, the amount of aluminium in the film did not interfere with formation of the desired silicon based compound films. In the course of the experiments, two silicon compound films were sent out for independent RBS (Rutherford Back-Scattering) sampling to determine the composition of the compound. The silicon oxide measured 36% Si/64% O, which is close to the theoretical 1:2 ratio for $SiO_2$.

The target was conditioned using an inert gas, then the process gas was added until the desired partial pressure was reached. The process was operated at that point until the process was stabilised. The substrates were then introduced to the coat zone and the film was applied. The substrate used was typically soda lime glass.

Tables 1, 2 and 3 set forth the process data for the production of three chromium front surface mirrors. The micron ($\mu$) unit of pressure is equal to 0.133 Pa.

The durability of this front surface mirror was measured with a Taber Abrader. The mirror achieved a Taber score of 8.65. The mirror also passed the Mil Spec tape test. The indices of refraction for the silicon dioxide layer and the titanium dioxide layer measured at 550 nm were 1.46 and 2.45, respectively. The reflectance integrated over the visible spectrum was measured at 84%.

EP 0 456 488 A1

## TABLE 1

| Layer | Thickness (Å) | SCCM $O_2$ | SCCM Ar | Potential (V) | Power (kw) | Current (A) | Pressure (μ) | No. Passes | Substrate Speed (in/min) |
|---|---|---|---|---|---|---|---|---|---|
| Cr | 547 | -- | 30 | 702 | 6.0 | 8.42 | 1.24 | 1 | 87.5 |
| $SiO_2$ | 779 | 42 | 22 | 380-550 | 4.0 | 8.0 | 1.60 | 3 | 19.0 |
| $TiO_2$ | 488 | 28 | 20 | 720-760 | 7.2 | 9.98-9.28 | 2.60 | 4 | 15.7 |

## TABLE 2

| Layer | Thickness (Å) | SCCM O$_2$ | SCCM Ar | Potential (V) | Power (kw) | Current (A) | Pressure (µ) | No. Passes | Substrate Speed (in/min) |
|---|---|---|---|---|---|---|---|---|---|
| Cr | 549 | -- | 30 | 699 | 6.0 | 8.46 | 1.26 | 1 | 87.5 |
| SiO$_2$ | 785 | 42 | 22 | 370-600 | 4.0 | 8.1 | 1.70 | 3 | 18.9 |
| TiO$_2$ | 488 | 28 | 20 | 720-760 | 7.2 | 10.0-9.4 | 2.46 | 4 | 15.7 |

Taber Score:  8.6

Integrated reflectance: 81.7%

EP 0 456 488 A1

EP 0 456 488 A1

## TABLE 3

| Layer | Thickness (Å) | SCCM $O_2$ | SCCM Ar | Potential (V) | Power (kw) | Current (A) | Pressure ($\mu$) | No. Passes | Substrate Speed (in/min) |
|---|---|---|---|---|---|---|---|---|---|
| Cr | 499.9 | -- | 30 | 702 | 6.0 | 8.40 | 1.26 | 1 | 85.4 |
| $SiO_2$ | 766.6 | 42 | 22 | 390-630 | 4.0 | 9.8-6.2 | 1.70 | 3 | 18.3 |
| $TiO_2$ | 518.4 | 28 | 20 | 756-720 | 7.2 | 10.0-9.38 | 2.47 | 10 | 15.7 |
| $SiO_2$ | 927.5 | 42 | 22 | 385-635 | 4.0 | 9.8-6.2 | 1.70 | 3 | 15.1 |
| $TiO_2$ | 532.3 | 28 | 20 | 715-760 | 7.2 | 9.42-9.9 | 2.40 | 10 | 15.3 |

The mirror in this embodiment exhibited a "blue" tinge.

Five representative samples of chromium front surface mirrors of the five layer design as illustrated in Table 3 were tested for their durability under the procedures described below, and the results compared to test specifications for conventional second surface silver mirrors.

Salt Fog Conventional mirrors have passed this test at 20% sodium chloride at 95°F for a maximum of 300 hours. Thus far front surface mirrors have passed the 300 hour mark and the results are good.

Humidity Conventional mirrors can withstand 100% relative humidity at 140°F for 65 hours. The front surface mirrors have also passed this test at 100% RH at 100° for 600 hours.

Taber Abrasion There is no abrasion specification for conventional mirrors since as a second surface mirror, the first surface is glass. In testing the inventive front surface mirror for resistance to abrasion, 150 revolutions in a Taber tester using a CS-10F wheel with a 500 gram load was employed. The change in reflectivity was less than 2%.

Prior to and after subjecting the five samples to the three corrosion testing procedures, optical properties were measured on all films. Changes in averaged values in (1) total reflectance, (2) transmission, and (3) colour, are set forth in Table 4.

## TABLE 4

| Optical Parameter | Humidity | Salt | Taber |
|---|---|---|---|
| % Reflectance | | | |
| (film side) | .1 ± .7 | −.1 ± .4 | −1.7 ± .20 |
| (colour value a)* | .1 ± .2 | −.1 ± .1 | .01 ± .01 |
| (colour value b)* | −.3 ± .5 | .3 ± 1.3 | −.80 ± .20 |
| % Transmittance | --- | --- | .09 ± .07 |
| * (Lab Hunter values) | | | |

Film side integrated reflectance was measured on the Spectrogard using an illuminant D-65 light source.

Five representative samples of chromium front surface mirrors of the three layer design as illustrated in Table 1 were tested under the humidity test (100°F, 98% RH for 600 hours), salt fog test (95°F, 20% sodium chloride for 300 hours), and Taber abrasion test (300 revolutions, CS-10F wheel, 500 gram load). In addition, the samples were subjected to the $FeCl_3$ acid test (5% $FeCl_3$ solution, 77°F, 2 hours). Table 5 sets forth the changes in averaged values in (1) total reflectance and (2) colour.

## TABLE 5

| Optical Parameter | Humidity | Salt | Taber | $FeCl_3$ |
|---|---|---|---|---|
| % Reflectance | | | | |
| (film side) | .7 ± .27 | .4 ± .28 | 2.7 ± .68 | .2 ± .23 |
| (colour value a)* | .3 ± .06 | .1 ± .04 | 0.1 ± .05 | .0 ± .02 |
| (colour value b)* | 1.3 ± .69 | 1.1 ± 1.02 | 2.2 ± .30 | .4 ± .16 |
| *(Lab Hunter values) | | | | |

Figure 6 is a comparison graph of the percent reflectance of the inventive chromium front surface mirror produced under the conditions in Table 1 measured against the wave length of radiation over the visible spectrum compared to the percent reflectances of a conventional second surface silver mirror and unenhanced chromium metal. Reflectance was measured at a 10 degree angle of incidence.

Although the invention has been described with respect to its preferred embodiments, it will be understood that the invention is to be protected within the full scope of the appended claims.

**Claims**

1. A front surface mirror, comprising:
   a substrate;
   a metal layer;
   a first dielectric layer; and
   a second dielectric layer.

2. A front surface mirror according to Claim 1 further comprising:
   a protective layer.

3. A front surface mirror according to Claim 2 further comprising:
   a third dielectric layer and a fourth dielectric layer

4. A front surface mirror, comprising:
   a first dielectric layer;
   a metal layer;
   a second dielectric layer;
   a third dielectric layer; and
   a protective layer.

5. A front surface mirror according to any preceding claim in which each of the dielectric layers comprises a metal oxide.

6. A front surface mirror according to Claim 5 in which each of the dielectric layers comprises one or more of titanium oxide, silicon oxide, aluminium oxide, tantalum oxide, tin oxide and zinc oxide.

7. A front surface mirror according to any one of Claims 2 to 6 in which the protective layer is a dielectric material comprising one or more of silicon nitride, silicon oxide, aluminium oxide, tantalum oxide, tin oxide and zinc oxide.

8. A front surface mirror according to any one of Claims 2 to 7 in which the thickness of the protective layer ranges from approximately 300 to 1400 Å.

9. A front surface mirror according to any preceding claim in which the metal layer comprises one or more of chromium, nickel-chromium alloy, stainless steel, aluminium and rhodium.

10. A front surface mirror according to any preceding claim in which the thickness of the metal layer ranges from approximately 400 to 650 Å.

11. A front surface mirror according to any preceding claim in which the thickness of the first dielectric layer ranges from approximately 600 to 1200 Å and wherein the thickness of the second dielectric layer ranges from approximately 400 to 650 Å.

12. A front surface mirror according to any one of Claims 3 to 11 in which the individual thickness of the first and third dielectric layer is approximately 600 to 1200 Å and wherein the individual thickness of the second and fourth dielectric layer is approximately 400 to 650 Å.

13. A front surface mirror according to any one of Claims 3 to 12 in which the individual thickness of the first and second dielectric layer is approximately 600 to 1200 Å and wherein the thickness of the third dielectric layer is approximately 400 to 650 Å.

14. A front surface mirror according to any preceding claim in which the substrate is selected from the group consisting of glass, plastic, metal and wood.

FIG. 1

FIG. 2

FIG. 3

FIG. 4

FIG. 5

FIG. 6

European Patent Office

# EUROPEAN SEARCH REPORT

Application Number

EP 91 30 4169

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2224366 (HOYA CORPORATION)<br>* page 4, line 12 - page 7, line 3 *<br>--- | 1, 5, 6, 9-11, 14 | C03C17/36<br>G02B5/08<br>G02B1/10 |
| X | EP-A-0341844 (LUZ INDUSTRIES ISRAEL)<br>* page 1, line 2 - page 2, line 58 *<br>* example 2 *<br>--- | 1, 2, 4, 7, 8, 10, 14 | |
| X | JOURNAL OF THE OPTICAL SOCIETY OF AMERICA.<br>vol. 72, no. 1, January 1982, NEW YORK US<br>pages 27 - 39; G.HASS:<br>"REFLECTANCE AND PREPARATION OF FRONT-SURFACE MIRRORS ETC."<br>* page 27 *<br>--- | 1, 5, 6, 9-11, 14 | |
| X | US-A-4322130 (ITO)<br>* column 2, line 10 - column 3, line 5 *<br>----- | 1, 5, 6, 9-11, 14 | |

TECHNICAL FIELDS SEARCHED (Int. Cl.5)

C03C
G02B

The present search report has been drawn up for all claims

| Place of search | Date of completion of the search | Examiner |
|---|---|---|
| THE HAGUE | 22 JULY 1991 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document